# EUROPEAN PATENT SPECIFICATION

(11) **EP 3 936 196 B1**
(45) Date of publication and mention of the grant of the patent: **17.09.2025**
(21) Application number: 21740421.9
(22) Date of filing: 26.04.2021
(51) Int. Cl.: A62C 35/10, G08B 17/00, G08B 25/14, G01L 17/00, A62C 3/16, A62C 37/11, A62C 37/38, G08B 17/04

(54) **FIRE EXTINGUISHING APPARATUS HAVING FIRE PREDICTION FUNCTION**
FEUERLÖSCHVORRICHTUNG MIT FEUERVORHERSAGEFUNKTION
APPAREIL D'EXTINCTION D'INCENDIE AYANT UNE FONCTION DE PRÉDICTION D'INCENDIE

(30) Priority: 13.05.2020 KR 20200057115
(43) Date of publication of application: 12.01.2022
(73) Proprietor: Ilsun System Co., Ltd, Asan-si Chungcheongnam-do 31411 (KR)
(72) Inventor: KANG, Jeong Soo, Chungcheongnam-do 31411 (KR)
(74) Representative: Germain Maureau
(86) International application number: PCT/KR2021/005249
(87) International publication number: WO 2021/230531

(56) References cited:
- WO-A1-2014/081208
- WO-A1-91/08022
- CN-A- 111 001 109
- KR-B1- 101 754 620
- KR-B1- 101 796 118
- KR-B1- 101 853 631
- KR-B1- 101 853 631
- KR-B1- 101 918 896
- KR-B1- 102 228 765

## Description

### BACKGROUND OF THE DISCLOSURE

### Field of the disclosure

The present disclosure relates to a fire extinguishing device with a fire prediction function and, more particularly, to a fire extinguishing device with a fire prediction function which is installed around a fire-extinguishing target and can perform predictive maintenance and an initial reaction about a fire by sensing early signs of a fire and providing an alert to the outside through a network.

### Related Art

Document CN 111 001 109 A discloses a fire extinguishing device.

The cable ducts of electronic device panels and electrical panels that are used in main industrial facilities such as power plants, electrical substations, and refineries are not equipped with a fire prevention system. Instead, a fire prevention system installed in an electrical room or an electronic device room is used.

Existing systems are configured such that when a fire occurs, a temperature sensor and a smoke sensor sense the fire situation after the fire occurs and transmit a signal to a controller, whereby an extinguishing solution of the fire prevention system is emitted and suppresses the fire. Accordingly, all of fire prevention systems that are currently operated have a problem that they are not suitable for the purpose of retarding or diagnosing and predicting a fire because they are designed to prevent disasters after a fire occurs.

Meanwhile, since the fire extinguishers provided in common houses or buildings are not used in ordinary circumstances, people cannot find the locations or have to approach the ignition point to use the fire extinguishers when a fire occurs, so there is a high possibility of an injury due to noxious gas and high-temperature heat generated by the fire. Accordingly, a demand for a fire extinguishing device that can provide disaster prevention against a fire even if it is not operated by a user when a fire occurs is increasing.

### [Prior Art Document]

### [Patent Document]

Korean Patent No. 10-0773517(2007.10.30)

### SUMMARY

An embodiment of the present disclosure provides a fire extinguishing device with a fire prediction function which is installed around a fire-extinguishing target and can perform predictive maintenance and an initial reaction about a fire by sensing early signs of a fire and providing an alert to the outside through a network.

An embodiment of the present disclosure provides a fire extinguishing device with a fire prediction function that can retard or diagnose and predict a fire by sensing early signs of a fire through a pressure sensor installed on a fire-extinguishing tube container before a fire occurs.

An embodiment of the present disclosure provides a fire extinguishing device with a fire prediction function that can perform a fire prevention operation by measuring the internal pressure of a fire-extinguishing tube container, sensing rupture of the container, and providing an alert about the container state to the outside.

According to the invention, a fire extinguishing device with a fire prediction function includes: a fire extinguishing tube container including a fire extinguishing substance therein, and automatically emitting the fire extinguishing substance when being exposed to surrounding fire or heat; and a fire pre-sensor coupled to a side of the fire extinguishing tube container and sensing a surrounding early sign of a fire by measuring an internal pressure of the fire extinguishing tube container.

The fire extinguishing tube container includes: a container body having a predetermined length, formed in a tube shape, and having a space therein filled with the fire extinguishing substance; and a closing member disposed at both ends of the container, respectively, and sealing the container body.

The covering members may be sealing caps that are fitted on both open ends of the container body and sealing open portions, respectively.

When the surrounding fire of the fire extinguishing tube container directly transfers to the outer surface of the container or the surrounding heat indirectly transfers to the outer surface of the container, the fire extinguishing substance may be emitted through a rupture hole that is formed in a specific region of the outer surface of the container.

The fire pre-sensor includes a pressure sensor coupled to the closing member installed on a side of the container body, and measuring the internal pressure of the container body in real time.

The fire pre-sensor is fitted on the closing member such that the pressure sensor is connected to the inside of the container body, and senses the internal pressure of the container body that expands, depending on the temperature of external air around the container body.

In embodiments, the fire extinguishing device with a fire prediction function further includes a fire monitor connected with the fire pre-sensor and generating monitoring information while collecting an internal state of the fire extinguishing tube container and external environmental information, in which
the fire monitor estimates a continuous increase of the temperature of the external air around the fire extinguishing tube container and predicts early signs of a fire and rupture of the fire extinguishing tube container by analyzing whether the internal pressure of the fire extinguishing tube container, which is measured in real time by the pressure sensor, changes over time.

The fire monitor calculates a variation of the internal pressure, classifies fire danger steps on the basis of the variation of the internal pressure, and provides an alert to the outside when the internal pressure of the fire extinguishing tube container increases over a specific critical value; and generates an alarm for a manager to take measures when rupture of the fire extinguishing tube container is predicted.

### ADVANTAGEOUS EFFECTS

The present disclosure can have the following effects. However, a specific embodiment is not intended to have to include all of the following effects or only the following effects, so the scope of a right of the present disclosure should not be construed as being limited by the embodiment.

The fire extinguishing device with a fire prediction function according to the present disclosure is installed around a fire-extinguishing target and can perform predictive maintenance and initial reaction about fire occurrence by sensing early signs of a fire and providing an alert to the outside through a network.

The fire extinguishing device with a fire prediction function according to an embodiment of the present disclosure can retard or diagnose and predict a fire by sensing early signs of a fire through a sensor installed on a fire-extinguishing tube container before a fire occurs.

The fire extinguishing device with a fire prediction function according to an embodiment of the present disclosure can perform a fire prevention operation by measuring the internal pressure of a fire-extinguishing tube container, sensing rupture of the container, and providing notification of the container state to the outside.

### BRIEF DESCRIPTION OF THE DRAWINGS

FIG. 1 is a view illustrating a fire extinguishing system with a fire prediction function according to the present disclosure.
FIG. 2 is a view illustrating a fire extinguishing device with a fire prediction function according to the present disclosure.
FIG. 3 is a block diagram illustrating the physical configuration of the fire extinguishing device shown in FIG. 2.
FIG. 4 is a flowchart illustrating a fire prediction operation that is performed by the fire extinguishing device shown in FIG. 3.

### DESCRIPTION OF EXEMPLARY EMBODIMENTS

Meanwhile, terms used herein should be understood as follows.

Terms "first", "second", etc. are provided for discriminating one component from another component and the scope of a right is not limited to the terms. For example, the first component may be named the second component, and vice versa.

It is to be understood that when one element is referred to as being "connected to" another element, it may be connected directly to another element or be connected to another element, having the other element intervening therebetween. On the other hand, it is to be understood that when one element is referred to as being "connected directly to" another element, it may be connected to or coupled to another element without the other element intervening therebetween. Meanwhile, the terms used herein to describe a relationship between elements, that is, "between", "directly between", "adjacent" or "directly adjacent" should be interpreted in the same manner as those described above.

Singular forms should be understood as including plural forms unless the context clearly indicates otherwise, and it will be further understood that the terms "comprises" or "have" used in this specification, specify the presence of stated features, steps, operations, components, parts, or a combination thereof, but do not preclude the presence or addition of one or more other features, numerals, steps, operations, components, parts, or a combination thereof.

In each step, reference characters (e.g., a, b, and c) are used for convenience without determining the order of each step, and each step may occur different from the orders described herein unless specific orders are clearly described in contexts. That is, each step may occur in the order described herein, may be substantially simultaneously performed, or may be performed in a reverse order.

The present disclosure may be achieved as computer-readable codes in a computer-readable recording medium and the computer-readable recording medium includes all kinds of recording devices in which data that can be read out by a computer system are stored. The computer-readable recording medium, for example, may be a ROM, a RAM, a CD-ROM, a magnetic tape, a floppy disk, an optical data storage device, etc. Further, the computer-readable recording media may be distributed to computer systems that are connected through a network and may store and execute computer-readable codes in the type of distribution.

Unless otherwise defined, all terms used herein have the same meaning as commonly understood by those skilled in the art to which the present disclosure belongs. It will be further understood that terms defined in dictionaries that are commonly used should be interpreted as having meanings that are consistent with their meanings in the context of the relevant art and will not be interpreted in an idealized or overly formal sense unless expressly so defined herein.

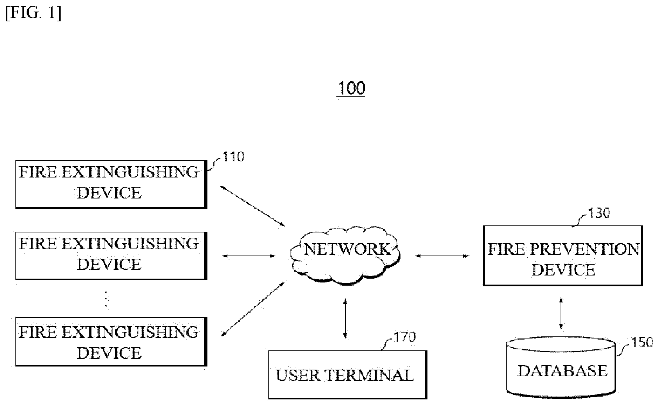

FIG. 1 is a view illustrating a fire extinguishing system with a fire prediction function according to the present disclosure.

Referring to FIG. 1, a fire extinguishing system with a fire prediction function may include a fire extinguishing device 100, a fire prevention device 130, a database 150, and a user terminal 170.

The fire extinguishing device 110 is a device that retards a fire and performs a fire suppression operation by emitting a fire extinguishing substance, and includes a fire extinguishing tube container including a fire extinguishing substance. The fire extinguishing device 110 can monitor the state of the fire extinguishing tube container by monitoring the internal pressure of the fire extinguishing tube container, and can detect a fire occurrence situation in the installation space and can provide an alert about an emergency to an external system. To this end, the fire extinguishing device 110 may be connected with the fire prevention device 130 through a network, and all of a plurality of fire extinguishing devices 110 may be connected with the fire prevention device 130.

The fire extinguishing device 110 may be installed and operated in an electrical PNL and an electronic device PNL at an industrial site, and can provide a fire extinguishing operation of automatically emitting a fire extinguishing substance when the temperature of the installation space reaches a specific temperature (e.g., 70 degrees) or more. The fire extinguishing device 110, in advance, senses a danger of a fire and gives backup such that measures for preventing a fire can be performed in cooperation with the fire prevention device 130, thereby being able to secure safety of electrical facilities and contribute to improving the reliability in facility operation.

The fire prevention device 130 can recognize a danger of a fire in advance using monitoring information transmitted from the fire extinguishing device 110 with a fire prediction function, and may be a server corresponding to a computer or a program that can provide relevant information such that fire prediction measures are performed. The fire prevention device 130 can be wirelessly connected with the fire extinguishing device 110 through Bluetooth, Wi-Fi, etc., and can exchange data with the fire extinguishing device 110 through a network.

In an embodiment, the fire prevention device 130 can keep information about fire prevention in cooperation with the database 150. Meanwhile, the fire prevention device 130, unlike FIG. 1, may include the database 150 therein. The fire prevention device 130 may include a processor, a memory, a user I/O device, and a network I/O device, which are not described in detail.

The database 150 may correspond to a storage device that stores various items of information that are required for a fire prevention process. The database 150 can store the monitoring information received from each fire extinguishing device 110 and can store information about facilities, equipment, and workers for fire prevention. However, the database 150 is not limited thereto and can store information collected and processed in various ways in the process of the fire prevention device 130 providing fire monitoring, diagnosing, and preventing in cooperation with the fire extinguishing device 110.

The user terminal 170 may correspond to a computing device that can check fire-related information and may be a smartphone, a notebook, or a computer, but is not limited thereto and may be various devices such as a tablet PC. The user terminal 170 may be connected with the fire prevention device 130 through a network and a plurality of user terminals 170 may be all connected with the fire prevention device 130.

A user can check fire prevention information related to a specific facility or an electrical facility through the user terminal 170, and can check monitoring information related to fire prevention and provide information about a fire to the manager of the building or the facility.

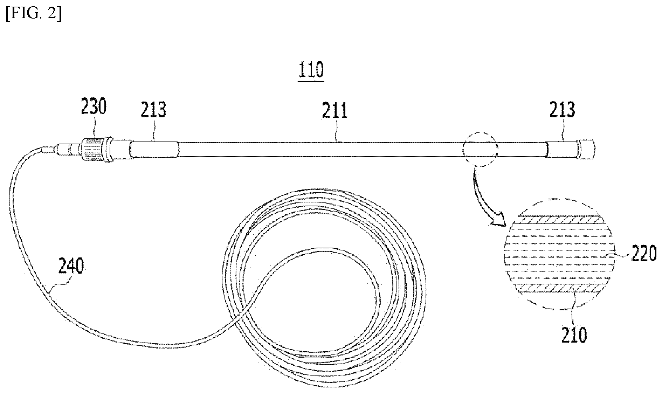

FIG. 2 is a view illustrating a fire extinguishing device with a fire prediction function according to the present disclosure.

Referring to FIG. 2, the fire extinguishing device 110 according to an embodiment includes a fire extinguishing tube container 210, a fire extinguishing substance 220, and a fire pre-sensor 230.

The fire extinguishing tube container 210 includes the fire extinguishing substance 220 therein, and is configured to be able to automatically emit the fire extinguishing substance 220 when it is exposed to surrounding fire or heat. In an embodiment, the fire extinguishing tube container 210 includes a container body 211 and closing members 213 sealing the openings at both ends of the container body 211.

The container body 211 is formed in a cylindrical shape having an accommodation space therein. The accommodation space of the container body 211 is filled with the fire extinguishing substance 220. The closing member 213 is disposed at each of both ends of the container body 211 such that the container body 211 has a sealed structure.

The container body 211 may be made of plastic-based polymers and is configured to be ruptured at a specific high temperature (temperature over 110°C□130°C) when a fire occurs such that the fire extinguishing substance 220 in the accommodation space can be discharged.

The container body 211 is formed in a tube shape with various lengths, such as a stick or a hose, depending on the installation space. The container body 211 may be formed thin in about 1~2mm thickness to be able to be quickly ruptured by heat when a fire occurs.

The covering members 213 may be sealing caps that are fitted on both open ends of the container body 211 and seal the open portions, respectively. The closing members 213 may be configured as parts of the container 211 to naturally seal the open portions by thermally forming both ends of the container body 211 that is open. Thermal forming is performed by a specific forming apparatus such that the center of the container 211 is closed in a predetermined shape in a deformable temperature condition thereof and the closed center portion is made smooth through a melting process. The fire pre-sensor 230 is installed on the closing member 213.

The fire extinguishing substance 220, which is in a liquid state and fills the accommodation space of the container body 211, may be inert gas-based or halogen compound-based substances such as halon gas, nitrogen, and carbon dioxide, but is not limited thereto and may be a pure fire extinguishing agent that does not influence both of the environment and installed electrical equipment. The fire extinguishing substance 220, as for the characteristics, has a boiling point lower than that of common water and expands with high pressure when temperature increases. The fire extinguishing device 110 can estimate an increase of the external air temperature as an early sign of fire occurrence and can predict fire occurrence by measuring the internal pressure of the fire extinguishing tube container 210.

The fire pre-sensor 230 is coupled to the closing member 213 disposed at a side of the container body 211 to sense early signs of a fire around the container body 211. The fire pre-sensor 230 includes a pressure sensor that measures the internal pressure of the container body 211. The fire pre-sensor 230 is coupled to the closing member 213 in a connector type and the pressure sensor for sensing internal pressure is fitted in the closing member 213 to be connected to the accommodation space for the fire extinguishing substance 220 in the container body 211. The pressure sensor is a device that senses the internal pressure of the container body 211 that is in proportion to temperature to be able to predict an early sign of a fire due to an increase in temperature of the external air around the container body 211.

A connection line 240 may extend from the fire pre-sensor 230 and may be connected to a fire motor. The fire pre-sensor 230 can communicate with the fire monitor and can transmit fire-early sign information including the measured internal pressure of the fire extinguishing tube container 210 through the connection line 240.

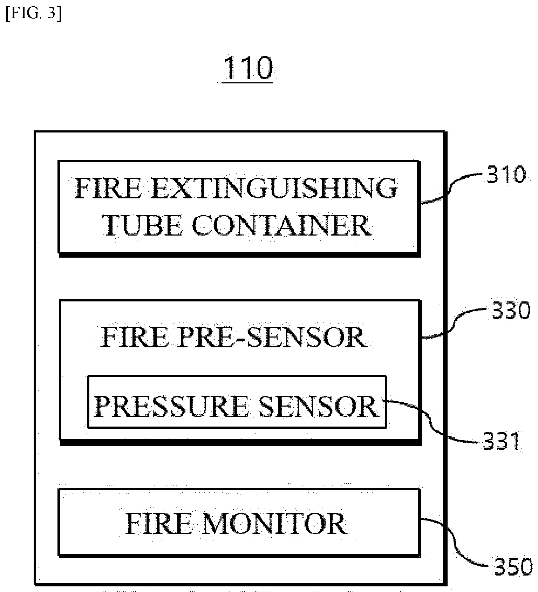

FIG. 3 is a block diagram illustrating the physical configuration of the fire extinguishing device shown in FIG. 1.

Referring to FIG. 3, the fire extinguishing device 110 includes of a fire extinguishing tube container 310, a fire pre-sensor 330, and a fire monitor 350.

The fire extinguishing tube container 310 includes a fire extinguishing substance therein, and can automatically emit the fire extinguishing substance when it is exposed to surrounding fire or heat. To this end, the fire extinguishing tube container 310 may be made of a material in which a rupture hole for automatic emission can be formed when surrounding fire or heat increases. For example, the fire extinguishing tube container 310 may be made of a plastic-based material, whereby a side thereof can be ruptured and the substance therein can be emitted out of the container by internal pressure when surrounding fire or heat increases over 70 degrees.

The fire extinguishing tube container 310 may be easily applied to a small space and may be fundamentally formed in a cylindrical shape, for the characteristics of the material, but may be easily changed in various lengths. For example, the fire extinguishing tube container 310 may be installed in a space with a high possibility of fire occurrence such as a panel board in a building, and may be installed after a specific portion is bent, depending on the structure of a space. The fire extinguishing tube container 310 may be installed and fixed at the rack (metal frame) of an electrical facility box such as a panel board.

In an embodiment, the material of a specific region of the fire extinguishing tube container 310 may be made of a material different from the material of the other region to induce rupture at the specific region when a fire occurs. For example, the middle region may be formed thinner than the other region of the fire extinguishing tube container 310 so that rupture is induced at the middle point, and a region corresponding to 1/3 or 2/3 of the entire length may be made of a material different from the material of the other region. That is, the material and thickness of the fire extinguishing tube container 310 may be different, depending on regions, to induce rupture at a predetermined point and a desired emission direction due to rupture.

In an embodiment, the fire extinguishing tube container 310 can emit the fire extinguishing substance through a rupture hole that is formed in a specific region of the outer surface of the container when surrounding fire directly transfers to the outer surface of the container or surrounding heat indirectly transfers to the outer surface of the container. To this end, the fire extinguishing tube container 310 may be configured to be automatically ruptured when it is directly exposed to fire or the surrounding temperature increases over a specific temperature. It is possible to induce the rupture point or the emission direction into a specific point or a specific direction by adjusting the thickness or using different materials for regions of the fire extinguishing tube container 310.

The fire pre-sensor 330 is connected to the fire extinguishing tube container 310 and can sense early signs of a fire around the installation position of the fire extinguishing device 110. In an embodiment, the fire pre-sensor 330 is coupled to an end of the fire extinguishing tube container 310 and can measure the internal pressure of the fire extinguishing tube container 310, and for this purpose, includes a pressure sensor 331. The pressure sensor 331 is connected to the inside of the fire extinguishing tube container 310 and can measure the pressure in the fire extinguishing tube container 310. Herein, internal pressure information means a change of the internal pressure of the fire extinguishing tube container 310 due to a change in temperature of the surrounding external air. Accordingly, the internal pressure information may correspond to the information about a temperature increase due to fire occurrence. That is, the internal pressure information measured by the fire pre-sensor 330 can be used to estimate the temperature in the space where the fire extinguishing tube container 310 is installed and to predict fire occurrence in advance while temperature continuously increases.

The fire pre-sensor 330 can sense an early sign of a fire by measuring the internal pressure of the fire extinguishing tube container 310. The fire pre-sensor 330 includes the pressure sensor 331, but is not limited thereto and may include various sensors, thereby being able to separately sense the factors of early signs of a fire. For example, the fire pre-sensor 330 may include a temperature sensor and a humidity sensor that can measure temperature and humidity of the external air around the fire extinguishing tube container 330, respectively, a flame sensor that senses generation of a spark, a smoke sensor that senses smoke, etc. The fire pre-sensor 330 can serve to obtain items of environmental information that are factors of early signs of a fire around the fire extinguishing tube container 310 by sensing the external environment such as temperature and humidity of external air and generation of a spark and smoke together with the internal space, that is, the internal pressure of the fire extinguishing tube container 310.

The fire monitor 350 may be installed at a predetermined distance from the fire extinguishing tube container 310 on which the fire pre-sensor 330 is installed, and may be connected with the fire pre-sensor 330 in a wired or wireless type. The fire monitor 350 can create monitoring information for preventing and sensing a fire while collecting the state of the fire extinguishing tube container 310 through the fire pre-sensor 330. The fire monitor 350 may include a communication module for transmitting the information collected by the fire pre-sensor 330 to an external device. The fire monitor 350 may be connected with the fire prevention device 130 through a network and can transmit monitoring information in real time or periodically.

In an embodiment, the fire monitor 350 can monitor the state of the fire extinguishing tube container 310 by controlling the operation of the pressure sensor 331 for measuring the internal pressure of the fire extinguishing tube container 310. The fire monitor 350 can sense in real time the internal pressure of the fire extinguishing tube container 310, and can provide an alert to an external system through a network when an early sign of a fire is sensed around the fire extinguishing tube container 310. The alert that is provided to the external system may be implemented and provided in various types such as a message, a voice, and vibration. The fire monitor 350 can store and keep the information about the internal pressure of the fire extinguishing tube container 310 in an internal memory, and can detect an abnormal signal out of a normal range from the information collected in the monitoring process and transmit relevant information to the external system.

In an embodiment, the fire monitor 350 can transmit monitoring information about the internal pressure and a variation of the internal pressure of the fire extinguishing tube container 310 by monitoring in real time the fire extinguishing tube container 310. The fire monitor 350 can measure the internal pressure of the fire extinguishing tube container 310 and calculates a variation of the internal pressure that is a change of the internal pressure per unit time.

When the internal pressure of the fire extinguishing tube container 310 increases over a specific critical value, the fire monitor 350 can determine it as an early sign of a fire, calculate the variation of the internal pressure for a specific time period including the point in time, classify the danger of a fire into caution, warning, and danger, etc., depending on the variation of the internal pressure, and generate an alarm for each of the fire danger step. In an embodiment, when the internal pressure of the fire extinguishing tube container 310 increases over a specific critical value, the fire monitor 350 can estimate that the temperature of the external air around the fire extinguishing tube container 310 has increased. Further, in this case, the fire monitor 350 calculates and compares the variation of the internal pressure for specific time periods before and after the point in time with a reference internal pressure range at a fire-possible external air temperature, thereby being able to determine the corresponding fire danger step. For example, the fire monitor 350 can determine a wire warning step when the variation of the internal pressure is in the reference internal pressure range, can determine a fire danger step when the variation is over the reference internal pressure range, and can determine a fire caution step when the variation is under the reference internal pressure range.

In an embodiment, when the internal pressure rapidly decreases while increasing, the fire monitor 350 can determine that the fire extinguishing tube container 310 has been ruptured on the basis of the variation of the internal pressure of the fire extinguishing tube container 310 and can provide information about the rupture of the container by generating an alarm. When the fire extinguishing tube container 310 is ruptured, it can be considered as an automatic fire extinguishing state due to fire occurrence, so a following prevention operation can be performed in the external system.

The fire extinguishing substance in the fire extinguishing tube container 310 may be naturally discharged over time, and accordingly, the internal pressure of the fire extinguishing tube container 310 may decrease. In this case, since it may be required to replace or check the fire extinguishing tube container 310, the fire monitor 350 can inform a manager or a checker of this situation in advance by generating an alarm.

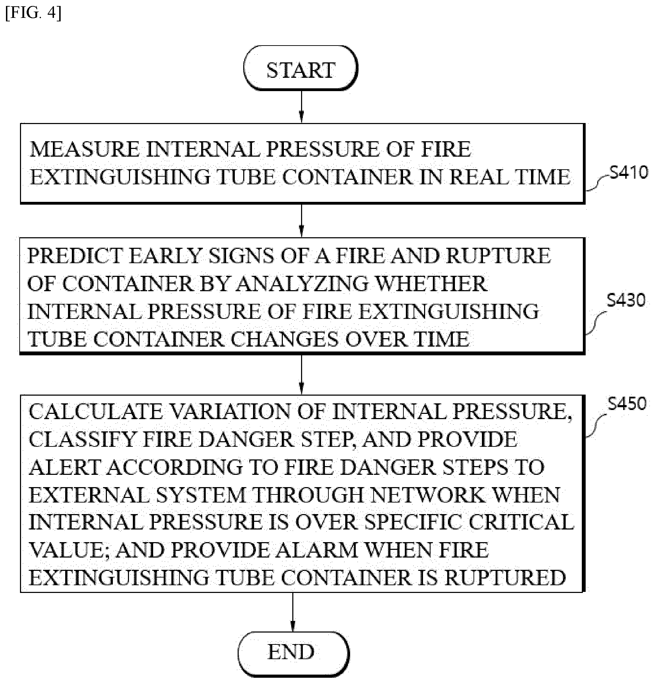

FIG. 4 is a flowchart illustrating an embodiment of a fire prediction operation that is performed by the fire extinguishing device shown in FIG. 3.

Referring to FIG. 4, the fire extinguishing device 110 can be installed around a fire-extinguishing target, can sense early signs of a fire around the fire extinguishing tube container 310 through the fire pre-sensor 330, can be connected with an external system through the fire monitor 350, and can provide an alert. In more detail, the fire pre-sensor 330 can be installed on a side of the fire extinguishing tube container 310 and can measure the internal pressure of the fire extinguishing tube container 310 in real time through the pressure sensor 331 connected to the inside of the fire extinguishing tube container 310 (step S410).

The fire monitor 350 can estimate a continuous increase of the temperature of the external air around the fire extinguishing tube container 310 and can predict early signs of a fire and rupture of the fire extinguishing tube container by analyzing whether the internal pressure of the fire extinguishing tube container 310, which is measured in real time by the pressure sensor 331 of the fire pre-sensor 330, changes over time (step S430).

When the estimated temperature of the external air increases over a specific critical value, that is, when the internal pressure increases over a specific critical value, the fire monitor 350 calculates the variation of the internal pressure, classifies the fire danger steps on the basis of the variation of the internal pressure, and provides an alert to the outside through a network. Further, when rupture of the fire extinguishing tube container 310 is predicted, the fire monitor 350 generates an alarm to enable a manager to take measures (step S450).

### [Detailed Description of Main Elements]

| | | | |
|---|---|---|---|
| 100: | fire extinguishing system with a fire prediction function | | |
| 110: | fire extinguishing device | 130: | fire prevention device |
| 150: | database | 170: | user terminal |
| 210, 310: | fire extinguishing tube container | | |
| 211: | container body | 213: | closing member |
| 220: | fire extinguishing substance | 230, 330: | fire pre-sensor |
| 240: | connection line | | |
| 331: | pressure sensor | | |
| 350: | fire monitor | | |

## Claims

1. A fire extinguishing device (110) with a fire prediction function, the fire extinguishing device (110) comprising:
a fire extinguishing tube container (210, 310) including a fire extinguishing substance (220) therein, and automatically emitting the fire extinguishing substance (220) when being exposed to surrounding fire or heat; and
a fire pre-sensor (230, 330) coupled to a side of the fire extinguishing tube container (210, 310) and sensing a surrounding early sign of a fire by measuring an internal pressure of the fire extinguishing tube container (210, 310),
wherein the fire extinguishing tube container (210, 310) includes:
a container body (211) having a predetermined length, formed in a tube shape, and having a space therein filled with the fire extinguishing substance (220); and
a closing member (213) disposed at both ends of the container body (211), respectively, and sealing the container body(211),
wherein the fire pre-sensor (230, 330) includes a pressure sensor coupled to the closing member (213) installed on a side of the container body (211), and measuring the internal pressure of the container body (211) in real time,
wherein the fire pre-sensor (230, 330) is fitted on the closing member (213) such that the pressure sensor is connected to the inside of the container body (211), and senses the internal pressure of the container body (211) that expands, depending on the temperature of external air around the container body (211),
the fire extinguishing device (110) further comprises a fire monitor (350) connected with the fire pre-sensor (230, 330) and generating monitoring information while collecting an internal state of the fire extinguishing tube container (210, 310) and external environmental information,
wherein the fire monitor (350) estimates a continuous increase of the temperature of the external air around the fire extinguishing tube container (210, 310) and predicts early signs of a fire and rupture of the fire extinguishing tube container (210, 310) by analyzing whether the internal pressure of the fire extinguishing tube container (210, 310), which is measured in real time by the pressure sensor, changes over time,
the fire extinguishing device **characterized in that**
the fire monitor (350) calculates a variation of the internal pressure, classifies fire danger steps on the basis of the variation of the internal pressure, and provides an alert to the outside when the internal pressure of the fire extinguishing tube container (210, 310) increases over a specific critical value; and generates an alarm for a manager to take measures when rupture of the fire extinguishing tube container (210, 310) is predicted.

2. The fire extinguishing device (110) of claim 1, wherein the closing members (213) are sealing caps fitted on both open ends of the container body (211) and sealing open portions, respectively.

3. The fire extinguishing device (110) of claim 1, wherein when the surrounding fire of the fire extinguishing tube container (210, 310) directly transfers to the outer surface of the container (210, 310) or the surrounding heat indirectly transfers to the outer surface of the container (210, 310), the fire extinguishing substance (220) is emitted through a rupture hole that is formed in a specific region of the outer surface of the container (210, 310).

## Patentansprüche

1. Feuerlöschvorrichtung (110) mit einer Brandvorhersagefunktion, wobei die Feuerlöschvorrichtung (110) Folgendes umfasst:
einen Feuerlöschrohrbehälter (210, 310), der darin eine feuerlöschende Substanz (220) enthält und die feuerlöschende Substanz (220) automatisch abgibt, wenn er einem umgebenden Feuer oder einer umgebenden Hitze ausgesetzt wird; und
einen Brandvorsensor (230, 330), der mit einer Seite des Feuerlöschrohrbehälters (210, 310) gekoppelt ist und ein Frühzeichen eines Brandes in der Umgebung durch Messen eines Innendrucks des Feuerlöschrohrbehälters (210, 310) erfasst,
wobei der Feuerlöschrohrbehälter (210, 310) Folgendes enthält:
einen Behälterkörper (211) mit einer vorbestimmten Länge, der in einer Rohrform ausgebildet ist und einen darin befindlichen Raum aufweist, der mit der feuerlöschenden Substanz (220) gefüllt ist; und
ein Verschlusselement (213), das jeweils an beiden Enden des Behälterkörpers (211) angeordnet ist und den Behälterkörper (211) abdichtet,
wobei der Brandvorsensor (230, 330) einen mit dem Verschlusselement (213) gekoppelten Drucksensor enthält, der an einer Seite des Behälterkörpers (211) installiert ist und den Innendruck des Behälterkörpers (211) in Echtzeit misst,
wobei der Brandvorsensor (230, 330) so am Verschlusselement (213) angebracht ist, dass der Drucksensor mit der Innenseite des Behälterkörpers (211) verbunden ist und den Innendruck des Behälterkörpers (211) erfasst, der sich in Abhängigkeit von der Temperatur der Außenluft um den Behälterkörper (211) ausdehnt,
die Feuerlöschvorrichtung (110) ferner einen Brandmelder (350) umfasst, der mit dem Brandvorsensor (230, 330) verbunden ist und Überwachungsinformationen erzeugt, während er einen internen Zustand des Feuerlöschrohrbehälters (210, 310) und externe Umgebungsinformationen erhebt,
wobei der Brandmelder (350) einen kontinuierlichen Anstieg der Außenlufttemperatur um den Feuerlöschrohrbehälter (210, 310) herum schätzt und frühzeitige Anzeichen eines Brandes und eines Bruchs des Feuerlöschrohrbehälters (210, 310) vorhersagt, indem er analysiert, ob sich der Innendruck des Feuerlöschrohrbehälters (210, 310), der in Echtzeit vom Drucksensor gemessen wird, im Laufe der Zeit ändert,
wobei die Feuerlöschvorrichtung **dadurch gekennzeichnet ist, dass** der Brandmelder (350) eine Schwankung des Innendrucks berechnet, Brandgefahrschritte auf der Grundlage der Schwankung des Innendrucks klassifiziert und nach außen eine Warnung ausgibt, wenn der Innendruck des Feuerlöschrohrbehälters (210, 310) über einen bestimmten kritischen Wert ansteigt; und einen Alarm für einen Manager erzeugt, um Maßnahmen zu ergreifen, wenn ein Bruch des Feuerlöschrohrbehälters (210, 310) vorhergesagt wird.

2. Feuerlöschvorrichtung (110) nach Anspruch 1, wobei die Verschlusselemente (213) Verschlusskappen sind, die an beiden offenen Enden des Behälterkörpers (211) angebracht sind beziehungsweise offene Abschnitte abdichten.

3. Feuerlöschvorrichtung (110) nach Anspruch 1, wobei, wenn das umgebende Feuer des Feuerlöschrohrbehälters (210, 310) direkt auf die Außenoberfläche des Behälters (210, 310) übergeht oder die umgebende Hitze indirekt auf die Außenoberfläche des Behälters (210, 310) übergeht, die feuerlöschende Substanz (220) durch ein Bruchloch, das in einem bestimmten Bereich der Außenoberfläche des Behälters (210, 310) gebildet ist, abgegeben wird.

## Revendications

1. Dispositif d'extinction d'incendie (110) ayant une fonction de prédiction d'incendie, le dispositif d'extinction d'incendie (110) comprenant :
un récipient de tube d'extinction d'incendie (210, 310) comprenant une substance d'extinction d'incendie (220) à l'intérieur de celui-ci et émettant automatiquement la substance d'extinction d'incendie (220) lorsqu'il est exposé à un incendie ou à une chaleur environnant(e) ; et
un pré-capteur d'incendie (230, 330) couplé à un côté du récipient de tube d'extinction d'incendie (210, 310) et détectant un signe précoce d'incendie environnant en mesurant la pression interne du récipient de tube d'extinction d'incendie (210, 310),
dans lequel le récipient de tube d'extinction d'incendie (210, 310) comprend :
un corps de récipient (211) ayant une longueur prédéterminée, en forme de tube, et ayant un espace dans celui-ci rempli de la substance d'extinction d'incendie (220) ; et
un élément de fermeture (213) disposé au niveau des deux extrémités du corps de récipient (211), respectivement, et scellant le corps de récipient (211),
dans lequel le pré-capteur d'incendie (230, 330) comprend un capteur de pression couplé à l'élément de fermeture (213) installé sur un côté du corps de récipient (211) et mesurant la pression interne du corps de récipient (211) en temps réel,
dans lequel le pré-capteur d'incendie (230, 330) est ajusté sur l'élément de fermeture (213) de sorte que le capteur de pression soit relié à l'intérieur du corps de récipient (211) et détecte la pression interne du corps de récipient (211) qui se dilate en fonction de la température de l'air externe autour du corps de récipient (211),
le dispositif d'extinction d'incendie (110) comprend en outre un dispositif de surveillance d'incendie (350) relié au pré-capteur d'incendie (230, 330) et générant des informations de surveillance tout en collectant un état interne du récipient de tube d'extinction d'incendie (210, 310) et des informations environnementales externes,
dans lequel le dispositif de surveillance d'incendie (350) estime une augmentation continue de la température de l'air externe autour du récipient de tube d'extinction d'incendie (210, 310) et prédit les signes précoces d'un incendie et la rupture du récipient de tube d'extinction d'incendie (210, 310) en analysant si la pression interne du récipient de tube d'extinction d'incendie (210, 310), qui est mesurée en temps réel par le capteur de pression, change au fil du temps,
le dispositif d'extinction d'incendie étant **caractérisé en ce que**
le dispositif de surveillance d'incendie (350) calcule une variation de la pression interne, classe les niveaux de danger d'incendie en fonction de la variation de la pression interne et fournit une alerte vers l'extérieur lorsque la pression interne du récipient de tube d'extinction d'incendie (210, 310) dépasse une valeur critique spécifique ; et génère une alarme pour qu'un responsable prenne des mesures lorsqu'une rupture du récipient de tube d'extinction d'incendie (210, 310) est prédite.

2. Dispositif d'extinction d'incendie (110) de la revendication 1, dans lequel les éléments de fermeture (213) sont des capuchons d'étanchéité ajustés sur les deux extrémités ouvertes du corps de récipient (211) et scellant les parties ouvertes, respectivement.

3. Dispositif d'extinction d'incendie (110) de la revendication 1, dans lequel, lorsque l'incendie environnant du récipient de tube d'extinction d'incendie (210, 310) se transfère directement à la surface externe du récipient (210, 310) ou lorsque la chaleur environnante se transfère indirectement à la surface externe du récipient (210, 310), la substance d'extinction d'incendie (220) est émise à travers un trou de rupture qui est formé dans une région spécifique de la surface externe du récipient (210, 310).
